# EUROPEAN PATENT APPLICATION

(11) **EP 4 152 437 A1**
(43) Date of publication of application: **22.03.2023**
(21) Application number: 22818590.6
(22) Date of filing: 14.04.2022
(51) Int. Cl.: H01M 4/13, H01M 10/0525

(54) **ELECTRODE ASSEMBLY, BATTERY, BATTERY MODULE, BATTERY PACK, AND ELECTRIC DEVICE**

(30) Priority: 24.06.2021 CN 202110704373
(71) Applicant: Contemporary Amperex Technology Co., Limited, Ningde City, Fujian 352100 (CN)
(72) Inventor: CHANG, Wen, Ningde Fujian 352100 (CN); FU, Chenghua, Ningde Fujian 352100 (CN); ZHANG, Chenchen, Ningde Fujian 352100 (CN); YE, Yonghuang, Ningde Fujian 352100 (CN); GUO, Suogang, Ningde Fujian 352100 (CN)
(74) Representative: Herrmann, Uwe
(86) International application number: PCT/CN2022/086771
(87) International publication number: WO 2022/267639

(57) **Abstract**

Embodiments of this application provide an electrode assembly, including a first electrode plate and a second electrode plate. The first electrode plate includes a first current collector and a first active material layer, where the first current collector includes a first body portion and a first tab, the first active material layer is applied on a surface of the first body portion, and the first tab extends from an end of the first body portion in a first direction. The second electrode plate includes a second current collector and a second active material layer, where the second current collector includes a second body portion and a second tab, the second active material layer is applied on a surface of the second body portion, and the second tab extends from an end of the second body portion in the first direction. At least an end part of the second active material layer close to the first tab is coated with a ceramic coating in a second direction perpendicular to the first direction, where length (y) of the ceramic coating in the first direction is 1/3-3/2 of length (x) of the first tab in the first direction. The ceramic coating of the given size can improve safety of batteries while reducing loss of energy density of the battery.

## Description

### TECHNICAL FIELD

This application relates to the field of batteries, and in particular, to an electrode assembly, a battery, a battery module, a battery pack, and an electric apparatus.

### BACKGROUND

In recent years, with increasing depletion of fossil energy and increasing pressure of environmental pollution, secondary batteries have received unprecedented attention and development. Secondary batteries have been increasingly widely used in, for example, energy storage power supply systems such as hydroelectric power plants, thermal power plants, wind power plants, and solar power plants, and many other fields including electric tools, electric bicycles, electric motorcycles, electric vehicles, military equipment, and aerospace.

Generally, a secondary battery includes a first electrode plate and a second electrode plate, and an electrode plate includes a current collector and an active material that is applied on the surface of the current collector as a coating. To facilitate electrical connection to electrode terminals of the secondary battery, a tab is formed on the current collector in a region uncoated with the active material. During assembling of electrode assemblies, tabs are prone to be bent and in contact with the active material, causing internal short circuit in batteries. To solve this problem, a usual practice is to apply a ceramic coating on both the first electrode plate and the second electrode plate. Such practice has improved safety and stability of the secondary battery to some extent, but causes loss of energy density of the battery as well.

### SUMMARY

In view of the foregoing problem, this application provides an electrode assembly, a battery, a battery module, a battery pack, and an electric apparatus.

According to a first aspect, an electrode assembly is provided, including a first electrode plate and a second electrode plate. The first electrode plate includes a first current collector and a first active material layer, where the first current collector includes a first body portion and a first tab, the first active material layer is applied on a surface of the first body portion, and the first tab extends from an end of the first body portion in a first direction. The second electrode plate includes a second current collector and a second active material layer, where the second current collector includes a second body portion and a second tab, the second active material layer is applied on a surface of the second body portion, and the second tab extends from an end of the second body portion in the first direction. At least an end part of the second active material layer close to the first tab is coated with a ceramic coating in a second direction perpendicular to the first direction, where length (y) of the ceramic coating in the first direction is 1/3-3/2 of length (x) of the first tab in the first direction. Thus, the first tab can be prevented from being bent and in contact with the second active material layer during assembling of the electrode assembly, thereby avoiding internal short circuit of the battery.

In some embodiments, thickness of the ceramic coating (d1) is 2 µm to 20 µm. The thickness of the ceramic coating is limited so that the ceramic coating is not so thick as to affect energy density of the cell and flatness of the electrode plate while being used to prevent internal short circuit.

In some embodiments, the second active material layer includes a substrate region and a thinned region extending from the substrate region, thickness of the thinned region being less than thickness of the substrate region; and the thinned region is provided with the ceramic coating. This prevents the electrode plate from being broken during cold pressing as a result of extension which leads to an edge so thick as to bulge, thereby improving yielding of good lithium-ion batteries and reducing manufacturing costs.

In some embodiments, a difference between a sum of the thickness of the ceramic coating and the thickness of the thinned region and the thickness of the substrate region is less than 3 µm.

Thus, the ceramic coating appropriately makes up for a thickness difference between the substrate region and thinned region of second active material, thereby narrowing a distance between edge regions of the first electrode plate and the second electrode plate, shortening migration paths for lithium ions. Electrolyte can fully fill the area between the edge regions under the action of capillarity, thereby reducing the risk of lithium metal precipitation in this area. Besides, the porous nature of ceramic, that is, the electrolyte retention capacity of the ceramic coating, can be utilized to ensure sufficient electrolyte in the thinned region, thereby relieving the problem of lithium precipitation in the thinned region.

In some embodiments, length (x) of the first tab in the first direction, length (y) of the ceramic coating in the first direction, thickness (d1) of the ceramic coating, and thickness (d2) of the thinned region satisfy 0.09≤(0.283-d1/d2)/(y/x)≤0.25 and 0.07≤(0.23-d1/(d1+d2))/(y/x)≤0.20, optionally, 0.109≤(0.283-d1/d2)/(y/x)≤0.231 and 0.091≤(0.23-d1/(d1+d2))/(y/x)≤0.176. Thus, thickness and width of the ceramic coating are limited so that the ceramic coating is not so thick as to affect energy density of the cell and flatness of the electrode plate while being used to solve problems of internal short circuit and lithium precipitation.

In some embodiments, in the first direction, the thinned region is provided on a side of the substrate region close to the second tab.

In some embodiments, the first tab and the second tab are located on one same side of the electrode assembly in the first direction.

Thus, because the first tab and the second tab are on the same side and the thinned region is provided on the side close to the second tab, the provision of the ceramic coating on the thinned region cannot only utilize the insulating property of ceramic to avoid internal short circuit occurring due to contact of the bent first tab with the second active material layer during assembling, but also utilize the porous nature of ceramic, that is, the electrolyte retention capacity of the ceramic coating, to ensure sufficient electrolyte in the thinned region, thereby relieving the problem of lithium precipitation in the thinned region.

In some embodiments, the first tab and the second tab are located on two sides of the electrode assembly in the first direction.

In some embodiments, an end part of the first active material layer close to the second tab is coated with a ceramic coating in the second direction, where length of the ceramic coating in the first direction is 1/3-3/2 of length of the second tab in the first direction.

Because the first tab and the second tab are located on two sides of the electrode assembly, the ceramic coating priorly provided on the second electrode plate can prevent contact between the first tab and the second active material layer, and the additional ceramic coating provided on the end part of the first active material close to the second tab can further prevent contact between the second tab and the first active material layer.

In some embodiments, in the first direction, a thinned region of the second active material layer is further provided on a side of the substrate region close to the first tab; and the thinned region is provided with a ceramic coating, and a difference between a sum of thickness of the ceramic coating and thickness of the thinned region and thickness of the substrate region is less than 3 µm. Therefore, the provision of the ceramic coating on the additional thinned region of the second active material layer provided on the side close to the first tab cannot only utilize the insulating property of ceramic to avoid internal short circuit, but also increase flatness of the electrode plate and energy density of the battery.

In some embodiments, the ceramic coating contains a ceramic material and a binder.

In some embodiments, the first electrode plate is a positive electrode plate, and the second electrode plate is a negative electrode plate.

According to a second aspect, a battery is provided, including a plurality of electrode assemblies according to the first aspect.

According to a third aspect, a battery module is provided, including the battery according to the second aspect.

According to a fourth aspect, a battery pack is provided, including the battery according to the second aspect or the battery module according to the third aspect.

According to a fifth aspect, an electric apparatus is provided, including the battery according to the second aspect, the battery module according to the third aspect, or the battery pack according to the fourth aspect.

The battery module, battery pack, and electric apparatus in this application include the secondary battery according to the first aspect of this application, and therefore have at least the same or similar technical effects as the secondary battery.

### BRIEF DESCRIPTION OF DRAWINGS

The accompanying drawings described herein are intended for better understanding of this application, and constitute a part of this application. Exemplary embodiments and descriptions thereof in this application are intended to interpret this application and do not constitute any improper limitation on this application. In the accompanying drawings:
FIG. 1 is a schematic diagram of a secondary battery according to an embodiment of this application.
FIG. 2 is an exploded view of the secondary battery according to the embodiment of this application in FIG. 1.
FIG. 3 is a cross-sectional view of an electrode assembly according to the embodiment of this application in FIG. 2 along line A-A.
FIG. 4 is a cross-sectional view of the electrode assembly according to the embodiment of this application in FIG. 2 along line B-B.
FIG. 5 is an enlarged view of the electrode assembly of FIG. 4 at the box.
FIG. 6 is a cross-sectional view of an electrode assembly according to another embodiment of this application.
FIG. 7 is an enlarged view of the electrode assembly of FIG. 6 at the box.
FIG. 8 is a cross-sectional view of an electrode assembly according to another embodiment of this application.
FIG. 9 is a cross-sectional view of an electrode assembly according to another embodiment of this application.
FIG. 10 is a schematic diagram of a battery module according to an embodiment of this application.
FIG. 11 is a schematic diagram of a battery pack according to an embodiment of this application.
FIG. 12 is an exploded view of the battery pack according to the embodiment of this application in FIG. 11.
FIG. 13 is a schematic diagram of an apparatus using a secondary battery as a power source according to an embodiment of this application.

Reference signs are described as follows:
1. battery pack;
2. upper box body;
3. lower box body;
4. battery module;
5. secondary battery;
51. housing;
52. electrode assembly;
6. first electrode plate;
61. first current collector;
611. first body portion;
612. first tab;
62. first active material layer;
7. second electrode plate;
71. second current collector;
711. second body portion;
712. second tab;
72. second active material layer;
721. substrate region;
722, 722a, 722b. thinned region;
8. ceramic coating;
9. separator;
53. cover plate;
54. connection member; and
55. electrode terminal.

### DESCRIPTION OF EMBODIMENTS

To make the objectives, technical solutions, and advantages of the embodiments of this application clearer, the following clearly describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application without creative efforts shall fall within the protection scope of this application.

Unless otherwise defined, all technical and scientific terms used in this application shall have the same meanings as commonly understood by those skilled in the art to which this application relates. The terms used in the specification of this application are intended to merely describe specific embodiments rather than to limit this application. The terms "include", "comprise", and any variations thereof in the specification and claims of this application and the foregoing description of the drawings are intended to cover non-exclusive inclusions. In the specification, claims, or accompanying drawings of this application, the terms "first", "second", and the like are intended to distinguish between different objects rather than to indicate a particular order or relative importance.

Reference to "embodiment" in this application means that specific features, structures, or characteristics described with reference to the embodiment may be included in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

In the description of this application, it should be noted that unless otherwise specified and defined explicitly, the terms "mount", "connect", "join", and "attach" should be understood in their general senses. For example, they may refer to a fixed connection, a detachable connection, or an integral connection, and may refer to a direct connection, an indirect connection via an intermediate medium, or an internal communication between two elements. A person of ordinary skills in the art can understand specific meanings of these terms in this application as appropriate to specific situations.

The term "and/or" in this application is only an associative relationship for describing associated objects, indicating that three relationships may be present. For example, A and/or B may indicate three cases: presence of only A; presence of both A and B; and presence of only B. In addition, the character "/" in this application generally indicates an "or" relationship between contextually associated objects.

In this application, "a plurality of" means more than two (inclusive). Similarly, "a plurality of groups" means more than two (inclusive) groups, and "a plurality of pieces" means more than two (inclusive) pieces.

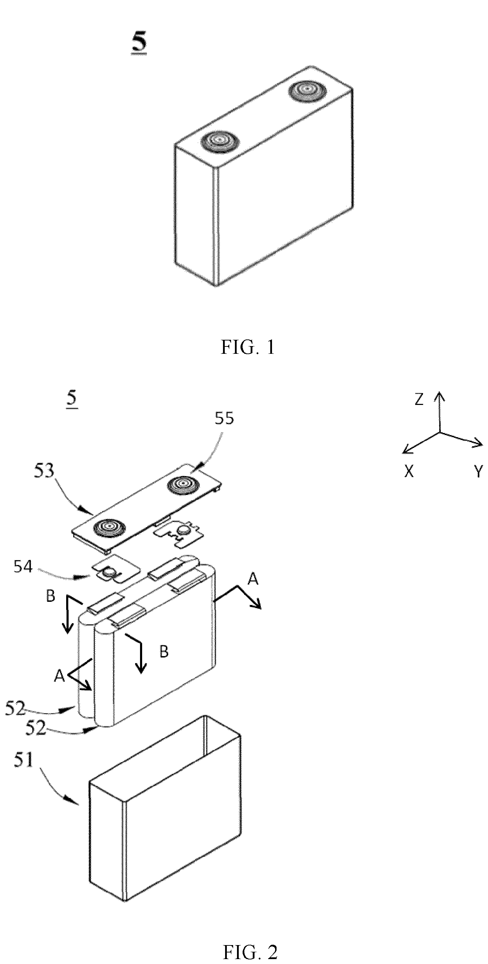

FIG. 1 shows a secondary battery 5 of a rectangular structure. In this application, the secondary battery includes a lithium-ion battery, a lithium-sulfur battery, a sodium/lithium-ion battery, a sodium ion battery, a magnesium ion battery, or the like. The following mainly uses a lithium-ion battery as an example to describe the idea of this application. It should be understood that the idea is applicable to any other appropriate types of rechargeable batteries.

Referring to FIG. 2, a secondary battery 5 according to an embodiment of this application includes a shell (including a housing 51 and a cover plate 53) and an electrode assembly 52. The housing 51 may include a base plate and a side plate connected onto the base plate, where the base plate and the side plate enclose an accommodating cavity. This application does not impose any special limitations on the shape of the housing 51, and the housing may be cylindrical, rectangular, or of any other shapes. The housing 51 has an opening communicating with the accommodating cavity, and the cover plate 53 can cover the opening to seal the accommodating cavity. The electrode assembly 52 is packaged in the accommodating cavity. Electrolyte infiltrates into the electrode assembly 52. There may be one or more electrode assemblies 52 in the secondary battery 5, and persons skilled in the art may make choices according to actual requirements.

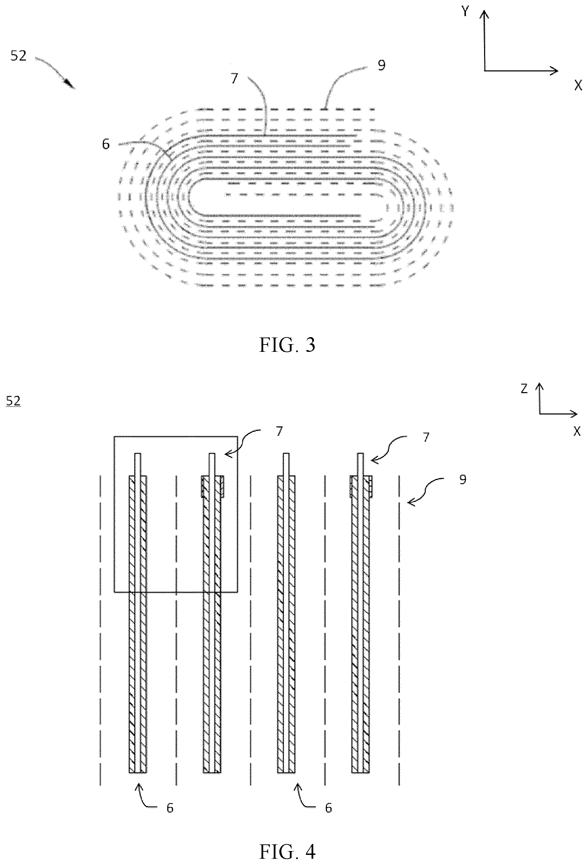

The electrode assembly 52 is a core component of the secondary battery for implementing charge and discharge functions. Referring to FIG. 3, the electrode assembly 52 includes a first electrode plate 6, a second electrode plate 7, and a separator 9, and the separator 9 separates the first electrode plate 6 from the second electrode plate 7. Working of the lithium-ion battery cell mainly relies on migration of lithium ions between the first electrode plate 6 and the second electrode plate 7 via the separator 9.

The electrode assembly 52 may be a winding structure. Specifically, one first electrode plate 6 and one second electrode plate 7 are provided, and the first electrode plate 6 and the second electrode plate 7 are both strip structures. The first electrode plate 6, the separator 9, and the second electrode plate 7 are stacked sequentially and wound for two or more turns to form the electrode assembly 52. The electrode assembly 52 may be flat-shaped.

Alternatively, the electrode assembly 52 may be a laminated structure. Specifically, the first electrode plate 6 is provided in plurality and the second electrode plate 7 is provided in plurality. The plurality of first electrode plates 6 and the plurality of second electrode plates 7 are alternately stacked, with the separators 9 separating the first electrode plates 6 from the second electrode plates 7.

Two electrode terminals 55 are provided which are disposed at the cover plate 53. Two connection members 54 are provided, one connection member 54 being connected to one electrode terminal 55 and the first electrode plate 6 of the electrode assembly 52, and the other connection member 54 being connected to the other electrode terminal 55 and the second electrode plate 7 of the electrode assembly 52.

The electrode assembly of this application is described below by using different embodiments.

### [Embodiment 1]

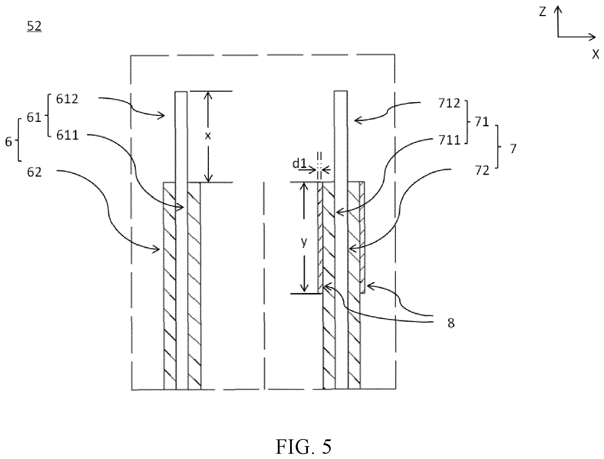

In Embodiment 1, referring to FIG. 4 and FIG. 5, the electrode assembly 52 includes a first electrode plate 6 and a second electrode plate 7, and a first tab 612 and a second tab 712 are located on one same side of the electrode assembly 52. The first electrode plate 6 includes a first current collector 61 and a first active material layer 62, the first current collector 61 includes a first body portion 611 and a first tab 612, the first active material layer 62 is applied on a surface of the first body portion 611, and the first tab 612 extends from an end of the first body portion 611 in a first direction (Z direction). The first electrode plate may be a positive electrode plate, and correspondingly, the first current collector 61 is made of aluminum foil, and the first active material layer 62 includes a ternary material, lithium manganate, or lithium iron phosphate. Aplurality of first tabs 612 (as shown in FIG. 4 and FIG. 5) may be provided, the plurality of first tabs 612 are stacked together and welded to a connection member 54.

The second electrode plate 7 includes a second current collector 71 and a second active material layer 72, the second current collector 71 includes a second body portion 711 and a second tab 712, the second active material layer 72 is applied on a surface of the second body portion 711, and the second tab 712 extends from an end of the second body portion 711 in the first direction. The second electrode plate 7 may be a negative electrode plate, and correspondingly, the second current collector 71 is made of copper foil, and the second active material layer 72 includes graphite or silicon. A plurality of second tabs 712 may be provided. The plurality of second tabs 712 are stacked together and welded to the connection member 54.

At least an end part of the second active material layer 72 close to the first tab 612 is coated with a ceramic coating 8 in a second direction (Y direction) perpendicular to the first direction (Z direction), where length of the ceramic coating 8 in the first direction is 1/3-3/2 of length of the first tab in the first direction, that is, 1/3≤y/x≤3/2. Moreover, the thickness (d1) of the ceramic coating is 2 µm to 20 µm.

The ceramic coating 8 contains a ceramic material and a binder. The ceramic coating may use a ceramic coating slurry with a ratio of ceramic material, binder, dispersing agent, and defoaming agent being 39:2:12:5:0.2, which has a solid content of 30%-50%. The coating material may be one of alumina hydrate, magnesium oxide, silicon carbide, and silicon nitride, preferably, alumina hydrate. The binder may be selected from a combination of one or more of polyacrylate, methyl acrylate, ethyl acrylate, 2-methyl methacrylate, and 2-ethyl methacrylate. The thickener may be selected from one of sodium carboxy methyl cellulose, carboxy methyl cellulose, methyl cellulose, and polyacrylic acid sodium. The dispersing agent may be selected from a combination of one or more of polyvinyl alcohol, polyacrylamide, and polyvinylpyrrolidone. The defoaming agent may be selected from a combination of one or more of 1-butanol and ethanol.

Referring to FIG. 4 and FIG. 5, the first tab 612 and the second tab 712 are both provided in plurality. In the process of gathering the first tabs 612 and the second tabs 712 and welding them to the connection members 54 respectively, roots of the tabs are prone to be bent and in contact with the active material layer, causing a risk of internal short circuit. In addition, the separator 9 may contract during use of the battery to cause short circuit. The applicant has discovered that the battery is more likely to catch fire due to internal short circuit when the tab of its positive electrode (the first tab 612) is in contact with the active material layer of its negative electrode (the second active material layer 72), as compared with other circumstances. Therefore, in Embodiment 1, the ceramic coating 8 is provided on at least an end part of the second active material layer 72 close to the first tab 612. Thus, when the first tab 612 is bent, the bent first tab 612 is not in direct contact with the second active material layer 72, but is in contact with the insulating ceramic coating 8, avoiding internal short circuit occurring due to bending of the first tab 612 and its contact with the second active material layer 72, thereby improving safety of the battery.

In addition, in the related technology, the ceramic coating is applied everywhere on the first active material layer 62 and the second active material layer 72. Such method, although improving safety, causes notable loss of energy density of the battery. As compared with the prior art, in Embodiment 1, the inventors conclude a relationship between the length (x) of the first tab 612 and the length (y) of the ceramic coating 8 based on experiments, and the length (y) of the ceramic coating 8 and thickness (d1) of the ceramic coating 8 are limited so as to reduce the loss of energy density while the same safety effect is achieved.

### [Embodiment 2]

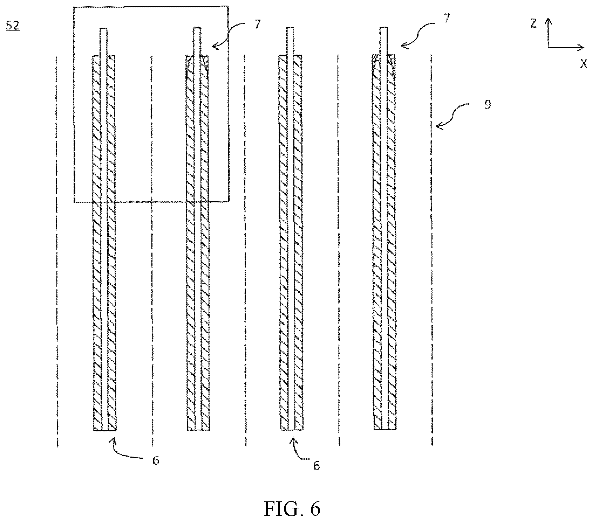

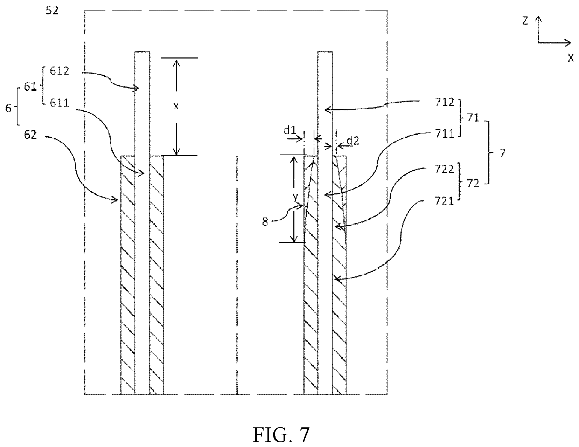

FIG. 6 and FIG. 7 illustrate Embodiment 2. In both Embodiment 2 and Embodiment 1, the first tab 612 and the second tab 712 are located the same side of the electrode assembly 52. Similarities of Embodiment 2 to Embodiment 1 are omitted, and only differences of Embodiment 2 from Embodiment 1 are described.

Referring to FIG. 7, the second active material layer 72 includes a substrate region 721 and a thinned region 722 extending from the substrate region, where thickness of the thinned region 722 is less than thickness of the substrate region 721. The thinned region 722 is provided on a side of the substrate region 721 close to the second tab 712. The thinned region 722 is provided with a ceramic coating 8. A difference between a sum of the thickness of the ceramic coating 8 and the thickness of the thinned region 722 and the thickness of the substrate region 721, for example, is less than 3 µm so that thickness of the ceramic coating 8 substantially makes up for the lost thickness of the thinned region. Preferably, the sum of the thickness of the ceramic coating 8 and the thickness of the thinned region 722 is approximately equal to the thickness of the substrate region 721. In consideration of manufacture error, the difference between the two may be controlled to be less than 3 µm, less than 1 µm, or the like.

As described above, the thinned region 722 is provided on the second active material layer 72 at a position close to the second tab 712, so as to prevent stress concentration at a position in the end part of the active material layer close to the tab during cold pressing, where such stress concentration could result in break of the current collector. However, the thinned region 722 increases a gap between the first electrode plate 6 and the second electrode plate 7 so that electrolyte cannot fully fill this area under the action of capillarity, resulting in a risk of lithium precipitation in this area. The ceramic coating 8 adds to the thinned region 722, decreasing the gap between the first electrode plate 6 and the second electrode plate 7 and reducing the risk of breaking of the electrolyte bridge. Besides, ceramic powder has some electrolyte retention capacity due to its high porosity, further relieving lithium precipitation in the thinned region 722.

In addition, because the first tab 612 and the second tab 712 are on the same side and the thinned region 722 is provided on the side close to the second tab 712, the provision of the ceramic coating 8 on the thinned region 722 cannot only utilize the insulating property of ceramic to avoid internal short circuit occurring due to contact of the bent first tab with the second active material layer during assembling, but also utilize the porous nature of ceramic, that is, the electrolyte retention capacity of the ceramic coating, to ensure sufficient electrolyte in the thinned region, thereby relieving the problem of lithium precipitation in the thinned region.

In Embodiment 2, length (x) of the first tab 612 in the first direction, length (y) of the ceramic coating 8 in the first direction, thickness (d1) of the ceramic coating 8, and thickness (d2) of the thinned region 722 satisfy 0.09≤(0.283-d1/d2)/(y/x)≤0.25 and 0.07≤(0.23-d1/(d1+d2))/(y/x)≤0.20, optionally, 0.109≤(0.283-d1/d2)/(y/x)≤0.231 and 0.091≤(0.23-d1/(d1+d2))/(y/x)≤0.176.

The applicant has found through research that the ceramic coating 8, although able to provide insulation so as to prevent internal short circuit and able to retain electrolyte so as to relieve lithium precipitation at the edge, makes the volumetric energy density of the battery drop if having an excessively large length (y) or an excessively large thickness (d1). In addition, when d1 and y satisfy relational expressions 0.09≤(0.283-d1/d2)/(y/x)≤0.25 and 0.07≤(0.23-d1/(d1 + d2))/(y/x)≤0.20, optionally, 0.109≤(0.283-d1/d2)/(y/x)≤0.231 and 0.091≤(0.23-d1/(d1+d2))/(y/x) ≤0.176, desirable insulation, electrolyte retention, and volumetric energy density can be achieved in one.

In some embodiments, (0.283-d1/d2)/(y/x) may be within a numerical range with any two of the following values as end values: 0.090, 0.109, 0.119, 0.121, 0.129, 0.138, 0.143, 0.160, 0.163, 0.184, 0.202, 0.215, 0.226, 0.230, 0.231, and 0.250. Moreover, (0.23-d1/(d1+d2))/(y/x) may be within a numerical range with any two of the following values as end values: 0.070, 0.091, 0.091, 0.096, 0.099, 0.104, 0.109, 0.120, 0.128, 0.138, 0.152, 0.163, 0.173, 0.174, 0.176, 0.199, and 0.200. It should be noted that, although the inventors have listed the above values in parallel, it does not mean that equivalent or similar performance can always be attained with (0.283-d1/d2)/(y/x) and (0.23-d1/(d1+d2))/(y/x) within a range defined by using any two of the foregoing values as end values. As for preferred ranges of (0.283-d1/d2)/(y/x) and (0.23-d1/(d1+d2))/(y/x) of this application, choices may be made based on the following specific discussion and specific experimental data.

### [Embodiment 3]

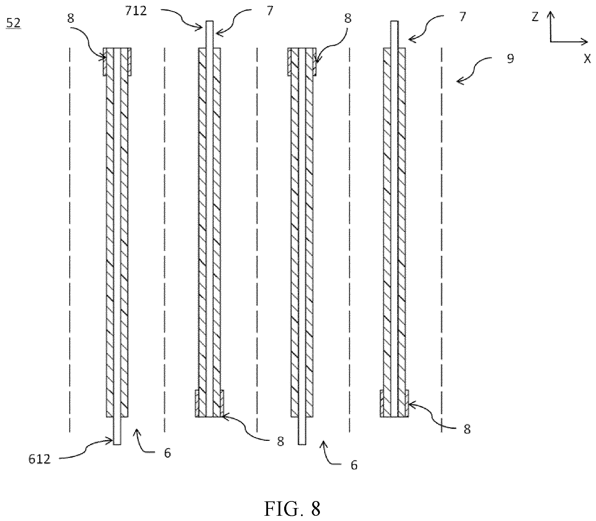

FIG. 8 illustrates Embodiment 3. It can be seen from FIG. 8 that Embodiment 3 differs from Embodiment 1 and Embodiment 2 in that the first tab 612 and the second tab 712 are located on two sides of the electrode assembly 52 in the first direction (Z direction). Similarities of Embodiment 3 to Embodiment 1 and Embodiment 2 are omitted, and only differences of Embodiment 3 from Embodiment 1 are described.

An end part of the first active material layer 62 close to the second tab 712 is coated with a ceramic coating 8 in the second direction (Y direction), where length of the ceramic coating 8 in the first direction is 1/3-3/2 of length of the second tab 712 in the first direction.

As shown in FIG. 8, the ceramic coating 8 that is applied on the second electrode plate 7 can prevent contact between the first tab 612 and the second active material layer 72, and the additional ceramic coating 8 provided on the end part of the first active material layer 62 close to the second tab 712 can further prevent contact between the second tab 7 and the first active material layer 62, thereby further improving safety of the battery.

In addition, the electrode assembly in embodiment 3 may also have the thinned region 722 as in embodiment 2.

### [Embodiment 4]

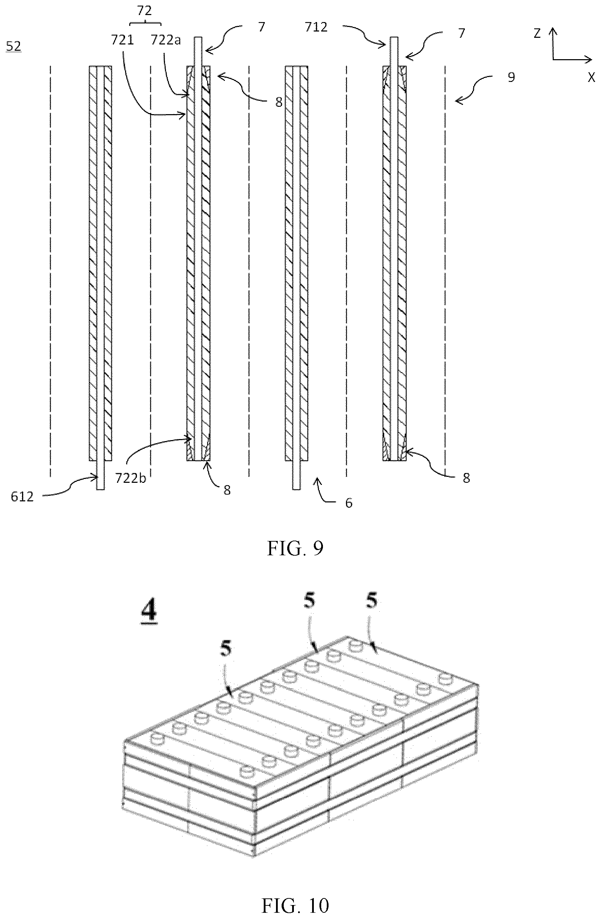

FIG. 9 illustrates Embodiment 4. Embodiment 4 differs from Embodiment 2 in that the first tab 612 and the second tab 712 are located on two sides of the electrode assembly 52 in the first direction (Z direction). Moreover, as shown in FIG. 9, in the first direction (Z direction), a thinned region of the second active material layer 72 is further provided on a side of the substrate region 721 close to the first tab 612. The thinned region is provided with a ceramic coating 8, and a difference between a sum of thickness of the ceramic coating 8 and thickness of the thinned region and thickness of the substrate region 721 is less than 3 µm.

This means that the second electrode plate 7 has two thinned regions 722a and 722b in embodiment 4. One thinned region 722a is close to the second tab 712, which is a thinned region provided for preventing stress concentration during cold pressing, and the provision of a ceramic coating 8 on this thinned region can relieve the problem of lithium precipitation in the thinned region 722a. The other thinned region 722b is provided close to the first tab 612, and the provision of a ceramic coating 8 on this thinned region 722b can avoid contact of the bent first tab 612 with the second active material layer 72 without affecting volumetric energy density of the battery. In this way, safety of the battery is improved.

The following describes the battery module, battery pack, and apparatus in this application with appropriate reference to the accompanying drawings.

In some embodiments, the secondary battery may be used to assemble a battery module, and the battery module may include one or more secondary batteries. The specific quantity may be chosen by persons skilled in the art based on use and capacity of the battery module.

FIG. 10 shows a battery module 4 as an example. Referring to FIG. 10, in the battery module 4, a plurality of batteries 5 may be sequentially arranged along a length direction of the battery module 4. Certainly, the secondary batteries may alternatively be arranged in any other manners. Further, the plurality of secondary batteries 5 may be fastened by fasteners.

Optionally, the battery module 4 may further include a shell with an accommodating space, and the plurality of secondary batteries 5 are accommodated in the accommodating space.

In some embodiments, the battery module may be used to assemble a battery pack, and the quantity of battery modules included in the battery pack may be chosen by persons skilled in the art based on use and capacity of the battery pack.

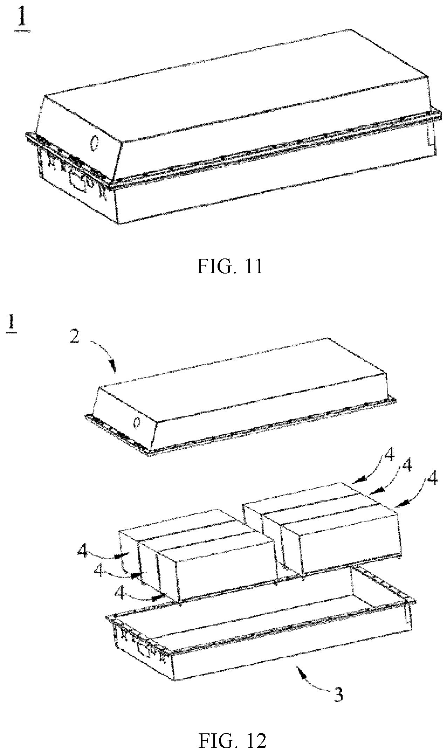

FIG. 11 and FIG. 12 show a battery pack 1 as an example. Referring to FIG. 11 and FIG. 12, the battery pack 1 may include a battery box and a plurality of battery modules 4 arranged in the battery box. The battery box includes an upper box body 2 and a lower box body 3. The upper box body 2 can cover the lower box body 3 to form an enclosed space for accommodating the battery module 4. The plurality of battery modules 4 may be arranged in the battery box in any manner.

In addition, this application further provides an apparatus. The apparatus includes one or more of the secondary battery, the battery module, or the battery pack provided in this application. The secondary battery, the battery module, or the battery pack may be used as a power source for the apparatus, or an energy storage unit of the apparatus. The apparatus may be, but is not limited to, a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite, an energy storage system, and the like.

For the apparatus, a secondary battery, a battery module, or a battery pack may be selected according to requirements for using the apparatus.

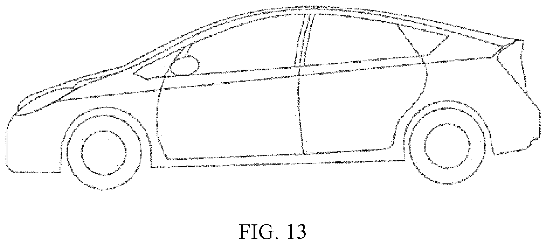

FIG. 13 shows an apparatus as an example. The apparatus is a battery electric vehicle, a hybrid electric vehicle, or a plug-in hybrid electric vehicle, or the like. To meet requirements of the apparatus for high power and high energy density of secondary batteries, a battery pack or a battery module may be used.

### [Examples]

The following describes examples of this application. The examples described below are illustrative and only used to explain this application, and cannot be construed as limitations on this application. Examples whose technical solutions or conditions are not specified are made in accordance with technical solutions or conditions described in literature in the field, or made in accordance with product instructions. The reagents or instruments used are all conventional products that are commercially available if no manufacturer is indicated. The amounts of components in the examples of this invention are all measured by weight, unless otherwise specified.

### Examples 1 to 19

The positive electrode plate, the separator, and the negative electrode plate of Embodiment 2 were sequentially stacked so that the separator was located between the positive electrode plate and the negative electrode plate to provide separation. Then, the resulting stack were wound to form an electrode assembly. The electrode assembly was placed in an outer package and the prepared electrolyte was injected, followed by processes including vacuum packaging, standing, formation, and shaping, to obtain a secondary battery. In the ceramic layer, the ceramic material used was alumina hydrate, the binder was polyacrylate, the thickener was polyvinyl alcohol, and the defoaming agent was 1-butanol.

### Comparative Examples 1 to 6

Comparative Examples 1 to 6 were prepared in the same method as Examples 1 to 19, except that the proportional relation of length x of the first tab, length y of the ceramic coating, thickness d1 of the ceramic coating 8, and thickness d2 of the thinned region 722 was adjusted.

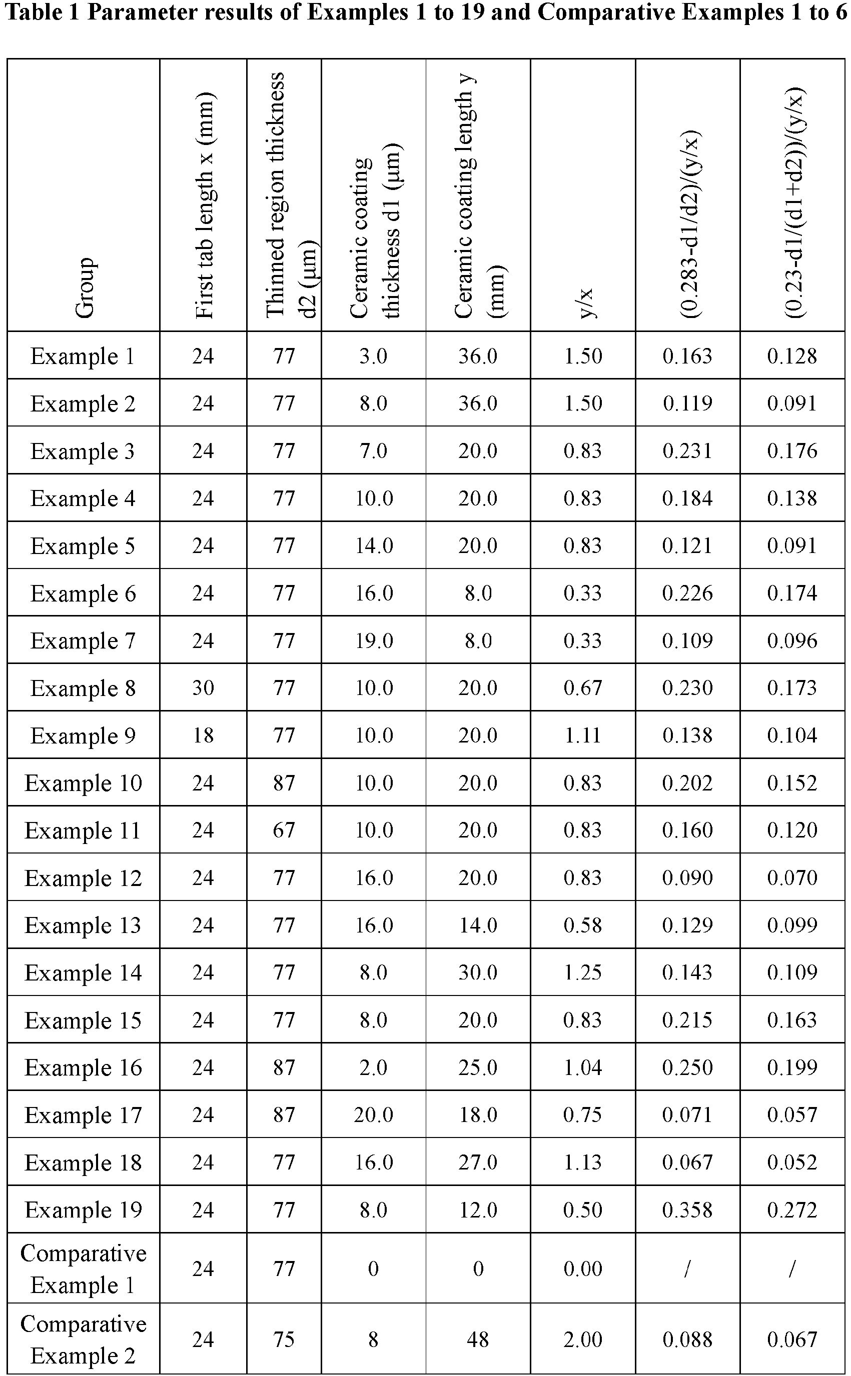

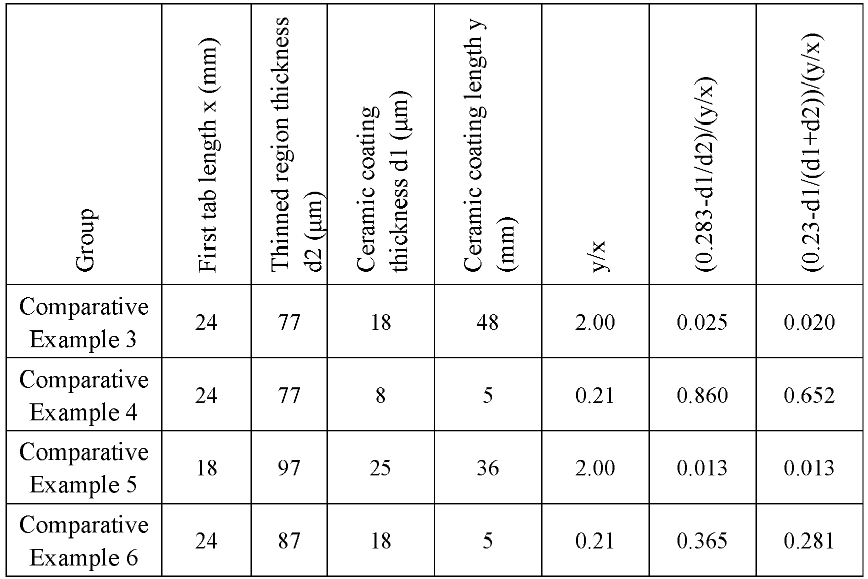

### Performance tests:

### (1) Short circuit test (contact of positive tab with negative electrode active material)

The positive tab was bent to be in contact with the negative electrode active material so as to make a short circuit, and safety of the batteries was compared under this condition.

### (2) Test of lithium precipitation in thinned region

The battery was subjected to a charge and discharge test and observation was made to check for any precipitation of lithium in the thinned region.

### (3) Relative volumetric energy density

Volumetric energy density of a battery without any ceramic coating 8 was set as a reference value, that is, 100%, and relative volumetric energy densities of the examples and comparative examples were calculated with respect to the reference value.

**Table 2 Performance test results of Examples 1 to 19 and Comparative Examples 1 to 6**

| Group | Short circuit test | Lithium precipitation test | Relative volumetric energy density |
|---|---|---|---|
| Example 1 | Light smoke without fire | Light precipitation of lithium | 100% |
| Example 2 | No fire | No | 99.85% |
| Example 3 | No fire | Light precipitation of lithium | 99.97% |
| Example 4 | No fire | No | 99.95% |
| Example 5 | No fire | No | 99.93% |
| Example 6 | No fire | No | 100% |
| Example 7 | No fire | No | 100% |
| Example 8 | No fire | No | 99.95% |
| Example 9 | No fire | No | 99.95% |
| Example 10 | No fire | No | 99.62% |
| Example 11 | No fire | Yes | 99.95% |
| Example 12 | No fire | No | 99.91% |
| Example 13 | No fire | No | 99.94% |
| Example 14 | No fire | No | 99.95% |
| Example 15 | No fire | No | 99.97% |
| Example 16 | Light smoke without fire | Light precipitation of lithium | 100% |
| Example 17 | No fire | No | 99.91% |
| Example 18 | No fire | No | 99.88% |
| Example 19 | No fire | Light precipitation of lithium | 100% |
| Comparative Example 1 | Fire | Yes | 100% |
| Comparative Example 2 | No fire | No | 97.95% |
| Comparative Example 3 | No fire | No | 95.16% |
| Comparative Example 4 | Heavy smoke without fire | Precipitation of lithium | 100% |
| Comparative Example 5 | No fire | No | 94.02% |
| Comparative Example 6 | Heavy smoke without fire | Precipitation of lithium | 100% |

It can be learned from the results that, when X and Y satisfy the relational expression 1/3≤y/x≤3/2, desirable insulation, electrolyte retention, and volumetric energy density can be achieved in one. In addition, when d1, d2, x, and y satisfy the relational expressions 0.09≤(0.283-d1/d2)/(y/x)≤0.25 and 0.07≤(0.23-d1/(d1+d2))/(y/x)≤0.2, optionally, 0.109≤(0.283-d1/d2)/(y/x)≤0.231 and 0.091≤(0.23-d1/(d1+d2))/(y/x) ≤0.176, desirable insulation, electrolyte retention, and volumetric energy density can be better achieved in one.

It should be noted that this application is not limited to the foregoing embodiments. The foregoing embodiments are merely examples, and embodiments having substantially the same constructions and having the same effects as the technical idea within the scope of the technical solutions of this application are all included in the technical scope of this application. In addition, without departing from the essence of this application, various modifications made to the embodiments that can be conceived by persons skilled in the art, and other manners constructed by combining some of the constituent elements in the embodiments are also included in the scope of this application.

## Claims

1. An electrode assembly, comprising a first electrode plate and a second electrode plate, wherein
the first electrode plate comprises a first current collector and a first active material layer, wherein the first current collector comprises a first body portion and a first tab, the first active material layer is applied on a surface of the first body portion, and the first tab extends from an end of the first body portion in a first direction;
the second electrode plate comprises a second current collector and a second active material layer, wherein the second current collector comprises a second body portion and a second tab, the second active material layer is applied on a surface of the second body portion, and the second tab extends from an end of the second body portion in the first direction; and
at least an end part of the second active material layer close to the first tab is coated with a ceramic coating in a second direction perpendicular to the first direction, wherein length of the ceramic coating in the first direction is 1/3-3/2 of length of the first tab in the first direction.

2. The electrode assembly according to claim 1, wherein thickness of the ceramic coating is 2 µm to 20 µm.

3. The electrode assembly according to claim 1, wherein
the second active material layer comprises a substrate region and a thinned region extending from the substrate region, thickness of the thinned region being less than thickness of the substrate region; and
the thinned region is provided with the ceramic coating.

4. The electrode assembly according to claim 3, wherein
a difference between a sum of the thickness of the ceramic coating and the thickness of the thinned region and the thickness of the substrate region is less than 3 µm.

5. The electrode assembly according to claim 3 or 4, wherein
length x of the first tab in the first direction, length y of the ceramic coating in the first direction, thickness d1 of the ceramic coating, and thickness d2 of the thinned region satisfy 0.09≤(0.283-d1/d2)/(y/x)≤0.25 and 0.07≤(0.23-d1/(d1+d2))/(y/x)≤0.20,
optionally, satisfy 0.109≤(0.283-d1/d2)/(y/x)≤0.231 and 0.091≤(0.23-d1/(d1+d2))/(y/x)≤0.176.

6. The electrode assembly according to any one of claims 3 to 5, wherein
in the first direction, the thinned region is provided on a side of the substrate region close to the second tab.

7. The electrode assembly according to any one of claims 1 to 6, wherein
the first tab and the second tab are located on one same side of the electrode assembly in the first direction.

8. The electrode assembly according to any one of claims 1 to 6, wherein
the first tab and the second tab are located on two sides of the electrode assembly in the first direction.

9. The electrode assembly according to claim 8, wherein
an end part of the first active material layer close to the second tab is coated with a ceramic coating in the second direction, wherein length of the ceramic coating in the first direction is 1/3-3/2 of length of the second tab in the first direction.

10. The electrode assembly according to claim 8, wherein
in the first direction, a thinned region of the second active material layer is further provided on a side of the substrate region close to the first tab; and
the thinned region is provided with a ceramic coating, wherein a difference between a sum of thickness of the ceramic coating and thickness of the thinned region and thickness of the substrate region is less than 3 µm.

11. The electrode assembly according to any one of claims 1 to 10, wherein
the ceramic coating contains a ceramic material and a binder.

12. The electrode assembly according to any one of claims 1 to 11, wherein
the first electrode plate is a positive electrode plate, and the second electrode plate is a negative electrode plate.

13. A battery, comprising the electrode assembly according to any one of claims 1 to 12.

14. A battery module, comprising the battery according to claim 13.

15. A battery pack, comprising the battery according to claim 13 or the battery module according to claim 14.

16. An electric apparatus, comprising the battery according to claim 13, the battery module according to claim 14, or the battery pack according to claim 15, wherein the battery, the battery module, or the battery pack is used as a power source or an energy storage unit.
